**Europäisches Patentamt**

**European Patent Office**

**Office européen des brevets**

(19)

(11) Publication number : **0 477 152 A2**

# (12) EUROPEAN PATENT APPLICATION

(21) Application number : **91850170.1**

(22) Date of filing : **20.06.91**

(51) Int. Cl.⁵ : **G06F 15/40**

(30) Priority : **21.09.90 SE 9003004**

(43) Date of publication of application :
**25.03.92 Bulletin 92/13**

(84) Designated Contracting States :
**CH DE FR GB IT LI SE**

(71) Applicant : **International Business Machines Corporation**
**Old Orchard Road**
**Armonk, N.Y. 10504 (US)**

(72) Inventor : **Bretan, Ivan Paul**
**Nybrogatan 24**
**S-11439 Stockholm (SE)**

(74) Representative : **Johansson, Lars E. et al**
**IBM Svenska AB, Intellectual Property Dept.**
**S-164 92 Stockholm (SE)**

(54) **Icon based query system.**

(57)   The invention relates to a method of querying a data base in a computer system containing input means, processor means, graphical display means and storage means. The data base contains objects relating to a specified and limited domain of knowledge. A query is composed by direct manipulation of graphical representations of said objects on a screen. The graphical representations are stored in memory, and each such graphical representation has a unique link to an entity in a conceptual schema, said schema containing a first set of records of data (entities) which are language independent representations of the objects in the data base.

The invention also relates to a query composition apparatus, suitable for retrieval of information from data bases. It comprises a data processor, a display unit with a manipulation area for manipulating graphical representations of data items stored in the data base, and a stored formalized description of the data base, said description being kept in storage and containing data records representing the items in the data base.

EP 0 477 152 A2

Conceptual Schema

Discourse Memory

Interactive Composition of Query Expression = Logical Form

**Direct Manipulation Interface**

Logical Form

**Paraphraser**

Natural Language Paraphrase(s)

User Selection of Paraphrase

*(Additional Modification of Query)*

Selected Logical Form

**DBMS**

Answer

Fig. 2

The present invention relates to natural language interfaces to computer systems in general, and to query system for relational data bases in particular.

There is a number of natural language interface systems for computers known, one of which is the subject of EP-0387226 (IBM Docket SW9-89-001) with the same assignee as the present application. Other systems are represented by US-4,688,195 (Texas Instruments), which is a system for interactively generating a natural language interface, INTELLECT (a keyword-based system capable of handling partial and ungrammatical sentences); Natural Language (comprises a grammar-based technology and uses semantic information to supplement its syntactic/grammar approach); Easytalk (referred to as a natural language/expert system hybrid).

In the system according to EP-0387226 which is a "true" natural language interface in the sense that it attempts to interpret queries formulated a and input to the system in the language that the user is able to speak, and in any way the user wishes. The only limitation is of course the restriction set by the dictionary and by the contents of the data base. The system will not be designed to "understand" queries relating to agricultural problems if the data base contains facts of steel production.

One fundamental feature of the referenced system according to EP-0387226 is a so called Conceptual Schema, which is the key to making the system able to be adapted to any language by providing appropriate grammars. The conceptual schema is built up from entities which are language independent representations of the objects in the data base, and by relations between said objects.

Said system further comprises analysis means for linguistic analysis of the natural language input, means for mapping the input into language independent logical forms, and means for transforming said logical forms into queries in a formal query language such as SQL (Strutured Query Language).

The CLF contains references to the entities in the Conceptual Schema, and in order to create the SQL query, the entities in the CLF are replaced by links to the data base.The transformation yields another logical form DBLF (Data Base Logical Form) which contains all information necessary to create the SQL expression.

The details of the process is disclosed in EP-0387226.

Said system also has means for creating paraphrases of the logical forms which are displayed to the user for verification of correctness. The method and apparatus for paraphrasing is disclosed in the pending EP-application 90850295.8 (IBM docket SW9-90-002).

The disadvantage of such a system is inherent in the natural language. Unfortunately natural languages are not very suited for making complex queries to data bases in that words tend to be ambiguous in many cases. There are both synonyms and homonyms which must be taken into account when designing the systems for each language.

This inherent ambiguity necessarily leads to analysis problems in that for very complex queries the result may be too a large number of paraphases, if indeed any will result, to be entirely practical. Processing time can also be impractically long.

The great advantage of a "true" natural language interface is on the other hand of course that it can be used practically without training. If you know the language in question you can turn on the system and enter a query. Provided the user has reasonable knowledge of the data base, the query will be accurately interpreted and a satisfactory answer will be given.

In EP-0351233 (Digital Equipment Corp.) there is disclosed a system for graphically representing and manipulating data stored in a data base.

A terminal in the system generates an input screen and an ouput screen. The input screen displays to the user data selection criteria and identifiers which the user may select to identify data of interest, and functions for processing the data. The output screen displays the processed data.

However, it appears as if the diclosed system does not have the ability of the present invention to build complex queries. Furthermore EP-0351233 certainly does not make use of a conceptual model of the data base, but rather it appears to be more directly "data base oriented".

In order to overcome the previously mentioned disadvantage of ambiguity in the NLI's, it is proposed in accordance with the present invention to use a direct manipulation of the objects of the task domain. This is achieved by the use of graphical representation, or icons, representing the objects, and by actions which can be performed on the icons. It may not eliminate misinterpretations completely, but it dramatically reduces the rate of them.

To overcome the above mentioned disadvantages, a method is provided for querying a data base in a computer system containing input means, processor means, graphical display means and storage means, said data base containing objects relating to a specified and limited domain of knowledge, by direct manipulation of graphical representations of said objects, said graphical representations being stored in menory, whereby each such graphical representations has a unique link to an enti in a conceptual shema, said shema containing a first set of records of data (entities) which are language independent representations of the objects in the data base, and further containing records of data representing relations between said objects. The method is characterized by the steps of displaying on said graphical display means said graphical representations of said objects, selecting from the displayed representations those that represent those objects of the data base that base that are relevant to the query to be created, displaying on said graphical display means a choice of actions that can be preformed on the graphical representations selecting from said displayed actions, ones that are appropriate for the query to be created, combining on the graphical display means the selected representations of objects with the selected appropriate actions in order to create a graphical representation of the desired query, whereby the combined graphical representations and actions represent a pictorial logical form of said query, and transforming said pictorial logical form into a formal query in a suitable query language.

Furthermore a query composition apparatus is provided, said apparatus being suitable for retrieval of information from data bases, and comprising a data processor, a display unit with a manipulation area for manipulating graphical representations of data items stored in the data base, a stored formalized description of the data base, said description being kept in storage and containing data records representing the items in the data base. The apparatus is characterized by having a stored set of graphically displayable symbols representing items in the data base, said symbols being associated with the data records of the formalized description of the data base, means for displaying said symbols; means for selecting symbols appropriate for a desired query; means for combining objects with each other, in order to build an aggregate of symbols representing the desired query; and means for executing the query.

A detailed description of the invention will be given below with reference to the drawings in which,

Fig. 1 shows a traditional Natural Language Interface,

Fig. 2 is an overview of a Direct Manipulation Interface,

Fig. 3 shows an integrated interface,

Fig. 4 shows how a simple example query is built on the screen,

Fig. 5 shows the window on the screen where the entity hierarcy is displayed,

Fig. 6-14 are examples of graphical representations in accordance with the invention, and

Fig. 15 is a simple flowchart showing the process of making a query interactively by manipulating "icons" on the screen.

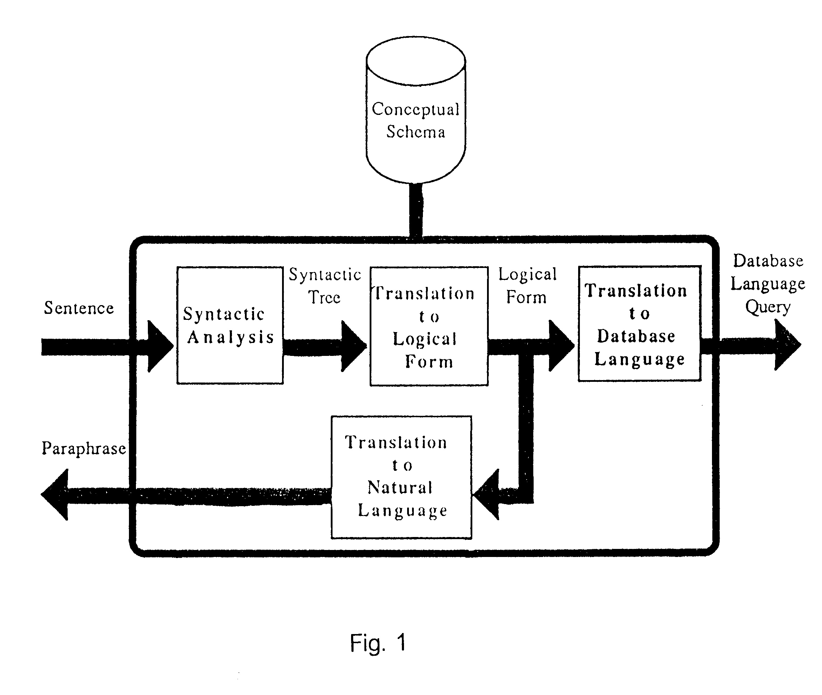

The system shown in Fig. 1 is representative of the Natural Language query system disclosed in above mentioned EP-0387226. It has three major components, an analyzing component that interprets the input and translates it into Logical Form, a paraphrasing component that translates the interpretation(s) back to (a set of, natural language expressions, and a conceptual schema which is the formalized model of the relational data base in question and contains all facts about the data in the data base.

A fourth component translates the verified Logical Form to a formal query in e.g. SQL (Structured Query Language).

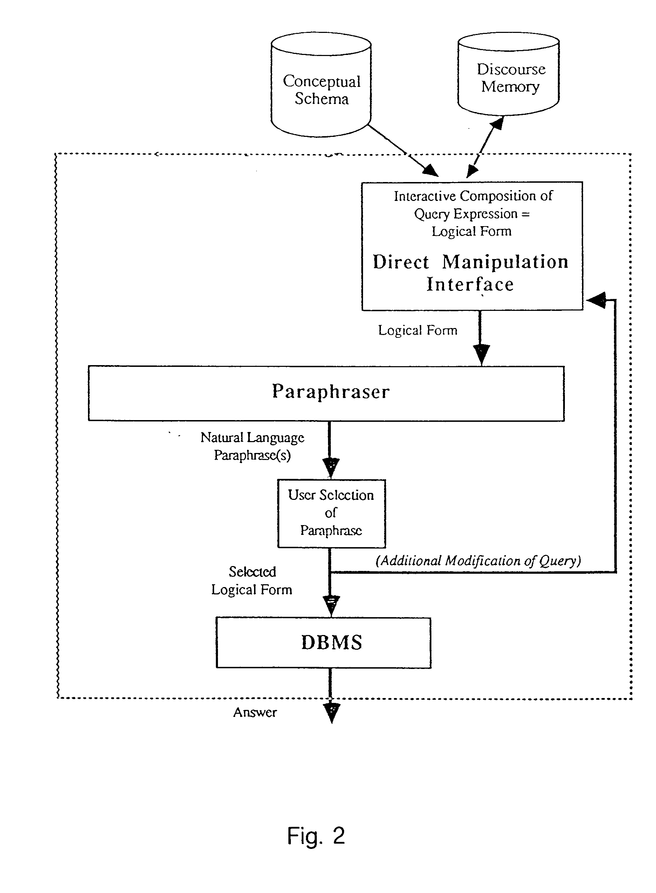

The system shown in Fig. 2 represents a set-up where the present invention is used instead of the NL input interface. Thus, as can be seen in the figure, there is a Direct Manipulation Interface (DMI) by means of which there is no need for an analyzing feature, because the query in the form of Pictorial Logical Form (PLF) is created directly on the screen, where icons representing the items of the query are displayed and combined, and where the underlying Logical Form has a direct correspondance with the PLF.

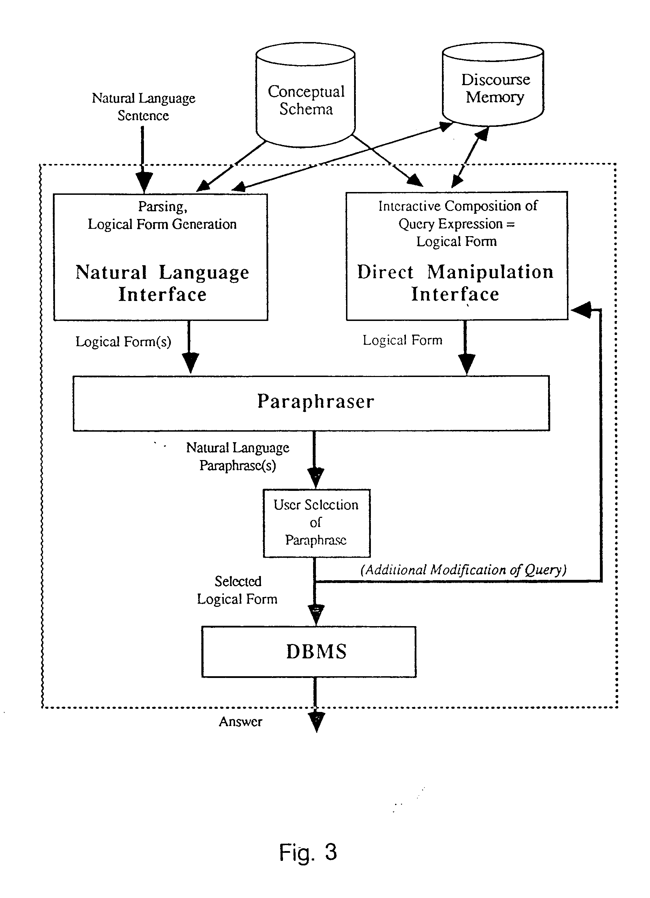

Fig. 3 is just to show a situation where there is an integration between the two approaches.

The details of the user interface in the system of the invention will now be given.

There are two central menus in the interface. The "Entities menu, that contains all the entities in the conceptual schema, created for the data base in question, and the "Conditions" menu which lists all facts about the shema clearly.

These "Conditions" are of the form "Continents have countries", "Countries are in continents", "Countries export products", etc. That is, the "conditions" are representations of the relationships between the entities in the shcema. The details of the conceptual modelling are apparent from EP-0387226, wich hereby is included by reference, and references therein.

The user selects from the "Conditions" menu a representation that fits the query he wants to construct.

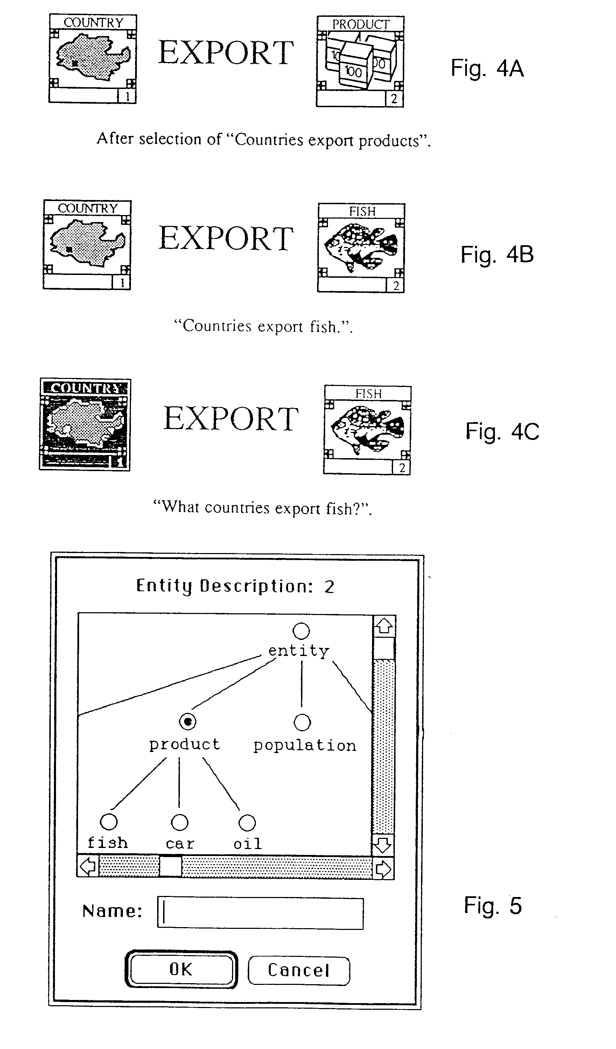

Let us consider an example (see Fig. 4A-C).

Suppose the user wants to know the answer to the question that expressed in natural language would read: "What countries export fish?". He would then select from the menu "Countries export products", and the graphical representation shown in Fig. 4A will be displayed on the screen.

The query we want to make concerns countries and the products countries export. Two things are missing in the displayed representation if we want to create a query. First we must specify that we are interested in "fish" which is a subtype of the "product" entity (Fig. 4B).

Each entity icon is a triple consisting of the entity, a number to distinguish this occurence of the entity from others, and optionally a name for this specific occurence (e.g. "country " could be named France). This kind of icon will be referred to as an Entity-Variable-Icon or EVI.

4

The information provided by the EVI, except the occurence number, can be edited by e.g. double-cliking the icon. Suppose the user in our example double-clicks on the "product" icon, the panel shown in Fig. 5 will be presented.

All entities in the hierarchy are shown, and the user can scroll through the small window until the entity looked for is displayed. By clicking in the small circle above an entity the user changes the entity of the icon question as desired.

The icon can be given a name by entering in the "Name" fiel. When the user is satisfied with the description the "OK-button" must be cliked for confirmation.

Alternatively a change of entity could be made by selecting the entity icon on the screen with a mouse pointer, thereby replacing the old one from the "Entities" menu. A further way of changing entity is to click on the small arrows displayed on the screen (see Fig. 5). By clicking an appropriate arrow, one is moved over the chart in the direction indicated by the arrow.

All these latter aspects of the interface are matters of straight forward programming, well within the competence of a man skilled in the art of programming for interfaces, and do not per se form any part of the invention.

One more piece of information is missing before the graphical representation forms a full query, and that is whether the user wants to know what countries export fish, what fish products are exported by countries of may be both. This specification is done by marking one of the entities, in the example by showing the icon in reverse video (see Fig. 4C). This is most conveniently implemented by cliking the entity with a mouse.

The query thus created can now be run by issuing the "Execute" command, e.g. by clicking on a menu or typing it in on the command line. The default result would be information about ALL countries, and what fish they export. Normally this would be more than the user needs to know, and the default can be overridden.

The process of creating a query as indicated may seem more cumbersome than the natural language alternative. However, it must be remembered that all it took to create the example query was three primitive actions: i) select condition, ii) change entity, and iii) select entity.

There should be available an "Operations" menu containing items representing relational operators, the universal quantifier, disjunction, negation and some useful functions, such as =, ≠, <, >, +, -, *, /, All, Or, Not, Average, Count, Max, Min, Sum, etc.

In the following the Pictorial Logical Form (PLF) will be discussed in detail.

The symbolic and iconic language that is used in the DMI (Direct Manipulation Interface) is called Pictorial Logical Form, PLF. The graphical expressions of PLF all have direct correspondences in expressions of the "underlying" logical form language, so in a way PLF is just a notational variant of this language.

The idea behind PLF is that concept-oriented logical formulas can be graphically represented, in such a perspicuous manner that users without any specific knowledge of logic can compose these formulas themselves. It is easily conceived that entities are suitable to represent as icons. Relations between entities are also feasible to represent graphically, but in the present application we have chosen to simply use words as "pictorial operators", that link together entities in a relation. Quantifiers, implications negations, on the other hand, are not that easy to find clear and easy-to-use graphical representations for.

The method chosen for describing PLF is somewhat informal but should be sufficient to give a general idea of what PLF is all about. For all of the principal categories of the logical form language, a comment will be made, which will describe how the corresponding PLF expression will appear on the screen. These PLF pictures could be broken down into separate well-defined elements, and be described non- pictorially, but it will not be done here.

To begin with, PLF queries are not sequentially ordered - instead a number of queries, as the underlying system understands it, can be specified anywhere in a query window in the DMI. The queries are built up as set expressions, except yes/no-questions, which are "formulas".

$$\langle set \rangle \quad ::= $$
$$\lambda \; ( \; \langle variable \rangle \; , \; \langle set \rangle \; ) \; | $$
$$\lambda \; ( \; \langle variable \rangle \; , \; \langle formula \rangle \; ) $$

The set expressions are the central expressions for constructing a query. A set expression denotes the set of elements <variable> such that <formula> holds. The set expression can be nested to specify n-tuples. The content" of the set expression is contained in <formula>, so here it is only needed to describe how one specifies which <variable> is bound by the λ-abstractor. In PLF, an important concept is the previously mentioned entity-variable icon, EVI, which is the pictorial representation for most variables. An EVI is marked as being "set-quantified" (indicating that we are interested in the set of all objects, as opposed to one single object) through single-clicking it, upon which it is inverted, as was shown in Fig. 4C. EVIs are described in more detail

below.

Formulas:

```
<formula>         ::=
    <predicate> |
    ¬ <formula> |
    <formula> ∧ <formula> |
    <formula> ∨ <formula> |
    ∀ ( <variable> , <formula> → <formula> ) |
    ∃ ( <variable> , <formula> )
```

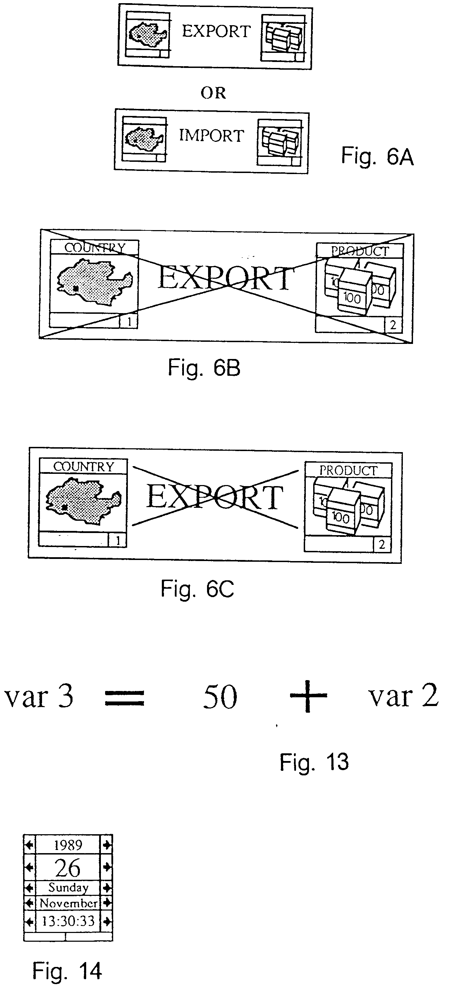

Conjunctions of formulas implicit in PLF: If two PLF formulas have common variables, then a conjunction is assumed. Disjunctions (fig. 6A), however, are explicit and are specified through selecting "Or" from the "Operators"-menu, or by issuing the corresponding keyboard command.

The negated formula is expressed as a crossed over PLF formula expression (Fig. 6B), and is specified by holding down <OPTION> N, and clicking at the formula box simultaneously, or choosing "Not" from the "Operations" menu. "No countries export products" would appear as in figure 6B.

When the conceptual schema states that countries export products, it should be interpreted as a fact about what is possible, not necessary. Therefore the above formula does not contradict the schema. It is of course quite useful to be able to give the negation a narrow scope, as in "There are certain countries that do not export certain products.". This fact would appear as in Fig. 6C.

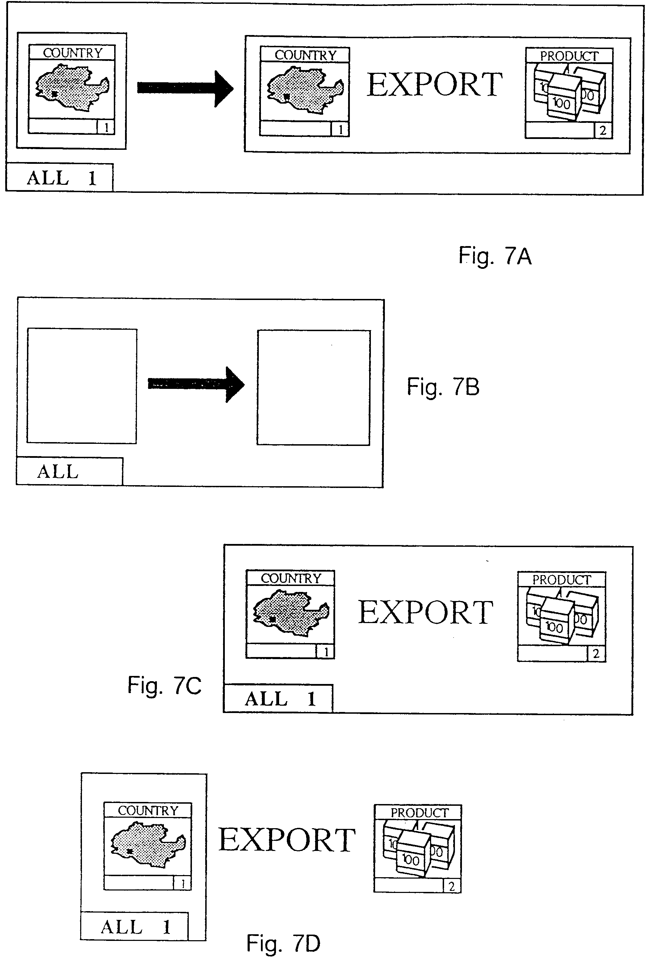

The universally quantified formula is one of the few PLF expressions that is cumbersome to find a good and intuitive pictorial representation for. In PLF there are actually two different notations for universally quantified formulas, one **g e n e r a l** notation, and one that only applies to certain **s p e c i f i c,** but common, cases. Fig. 7A shows the general PLF representation of "Do all countries export products?".

Here, the left hand side (which, depending on the current layout of the window, could be the upper half) of the formula box contains the antecedent of the implication, and correspondingly with the right hand side of the arrow (or lower part of the formula box). The general representation for universally quantified formulas are activated by selecting "All" from the "Operators" menu, upon which a formula "skeleton" (Fig. 7B) appears on the screen, which the user can fill with information.

This is perhaps not simple to learn for a user who knowns nothing about universal quantifiers, but in the experiment encouraging direct manipulation environment, the users have a good chance to learn while doing. Nevertheless, there is a need for a simple way of expressing queries containing universal quantifiers, and therefore the **o n e - e n t i t y - a n t e c e d e n t** notation complements the general notation. The OEA notation can be used in those cases where the antecedent of the implication is a single EVI. This is very common, as in the sentence in figure 7A. That query could be expressed with the OEA notation as in figure 7C.

This representation is not only simpler to take in, because of the hidden implication, but it is also easier to create. The user draws a formula box around the expression in question, selects an entity through single-clicking, and chooses the same "All" item from the "Operators" menu as before. This type of query is probably more elegantly formulated in natural language. However in analysis of natural language, assignment of quantifier scopings is complicated, and is a common source of ambiguity.

The existential quantifier is, as has been shown throughout the examples, implicit. Wherever an entity-variable occurs, if nothing else is specified, an existential quantifier is assumed. However, sometimes the user wants to change the scope of an implicit existential quantifier, which can be done in a natural way in the DMI. Take figure 7C as an example. Imagine the user wants to change the PLF to something corresponding to the query "Does every country export a certain product?" where the "product" EVI's existential quantifier has wider scope than the universal quantifier. It is achieved quite effortlessly through narrowing the formula box with the mouse pointer (Fig. 7D).

Since the "product" EVI now is graphically outside the formula box, it is given wider scope than the quantifier on the "country" EVI.

The universal quantifier is probably the single most problematic construction in the PLF visual language, but as has been shown, it is by no means impossible to come up with ways of expressing those constructions in a manner smoothly integrated with the rest of the DMI.

Predicates:

```
<predicate>    ::=
      inst ( <variable> , <entity> ) |
      named ( <variable> , <string> ) |
      <verbrole> |
      possess ( <entity> , <entity> ,
                  <variable> , <variable> ) |
      <loctime> ( <entity> , <entity> ,
                    <variable> , <variable> ) |
      preprole ( <entity> , <entity> ,
                  <variable> , <variable> ) |
      <term> <relop> <term>
```

```
<verbrole>       ::=
      verb ( <entity> , <entity> ,
            <variable> , <variable> ) |
      verb ( <entity> , <entity> , <entity> ,
            <variable> ,<variable> , <variable> ) |
      verb ( <entity> , <entity> , <entity> , <entity> ,
            <variable> , <variable> , <variable> ,
            <variable> )
```

```
<loctime>        ::=  locpos | timepos
```

```
<relop>          ::=  =  | ≠  | >  | <  | ≥  | ≤
```

The predicates are the building bricks of PLF. Predicates can basically be divided into four groups: instance, name, role relations and predicates of comparison.

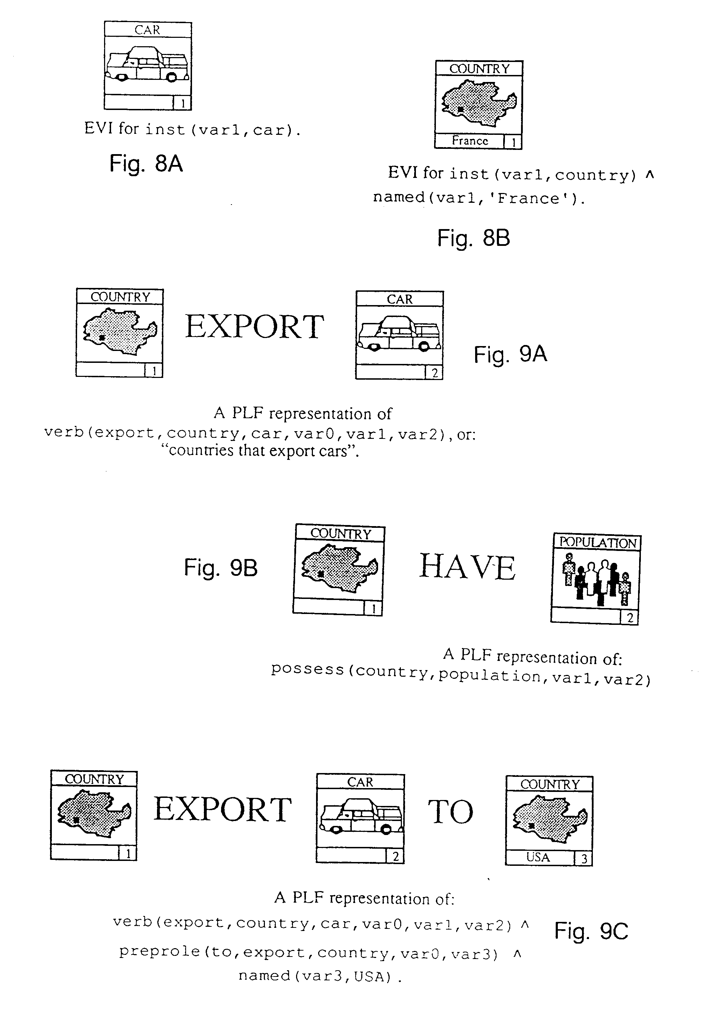

The inst relation: An entity is a set of objects, and the inst(<variable>, <entity>) predicate simply states that the element that <variable> denotes is an element of the set <entity>. The PLF representation of an inst relation is simply an EVI. Fig. 8A is the EVI for inst (var1,car).

In addition the EVI encodes an existential quantifier over var1, so there is no absolute correspondence between an inst predicate and a PLF pictorial expression.

The n a m e d relation (Fig. 8B): An instance of an entity can have a name. The name can be seen as further delimiting the possible range of a given variable, singling out a specific instance, a single data value. Names can be partial, if the reserved wild-card characters are used. The character "*" will match any number of characters, and "?" will match exactly one character.

The role relations: All the role relations have their counterparts in the conceptual schema. Whereas the role relations from the schema specifies what kind of relations between entities are possible in the domain, the role relations in an PLF query must be validated with respect not only to entities, but also with respect to i n s t a n c e s of these entities, i.e. the <variable> in the roles. That is why the roles in PLF always have one extra argument as compared to the number of <entity> arguments to the roles in the schema.

The v e r b relation is the principal relation linking together different entities to specify complex search criteria. The first <entity> argument denotes the verb entity, the second the subject entity, the third the direct object entity and the fourth the indirect object entity. The variables are assigned analogously. I have chosen to portray the verb relation an "infix" PLF expression, with the English term of the verb entity between the subject EVI and the direct object EVI as in figure 9A. If there is an indirect object EVI, then it follows the direct object EVI. The main reason for not representing the verb entity as an EVI, is that verb entities often stand for more abstract concepts than noun and adjective entities, and the fact that the user does not need to make explicit reference to verb variables in the system presented here.

Thus, the current model does not give the user the possibility of modifying the verb entity through explicit variable reference. A preposition role (preprole) or a locative/temporal role (<loctime>) modifying the verb entity for instance, contains a reference to the variable of the verb entity. This reference is maintained by the interface, so the variable of the verb entity is not shown in the PLF pictures. I have chosen to do this by showing, where possible, all the involved complements and modifiers of a certain verb entity on the same "line" as the verb. Where this is not possible, the sequence of entities will wrap itsfelf onto the next "line" of the window.

The **p o s s e s s** relation is used to encode possession as expressed in English by "of" or "have" as in "capital of countries" or "countries have capitals". The first <entity> possesses the second. The PLF representation is parallel to the one for <verbrole>, using "have" to indicate the relation of possession, as in Fig. 9B, the PLF for "countries have populations".

There are only two locative/temporal relations: **l o c p o s** (e.g. "countries are in continents") and **t i m e p o s** (e.g. "exportdates are when exporting takes place"). One could of course imagine several additional types of locative and temporal relations, but these two are sufficient for demonstration purposes. These roles are usually used as adverbial modifiers, when a <verbrole> is involved, but also "by themselves" as in "countries are in continents". Prepositional roles (preprole), on the other hand, function more like complements, and cannot occur without an accompanying <verbrole>. Fig. 9C is the PLF expression from Fig. 9A, modified with a preposition role - the corresponding natural language sentence could be "There are countries that export cars to countries named USA".

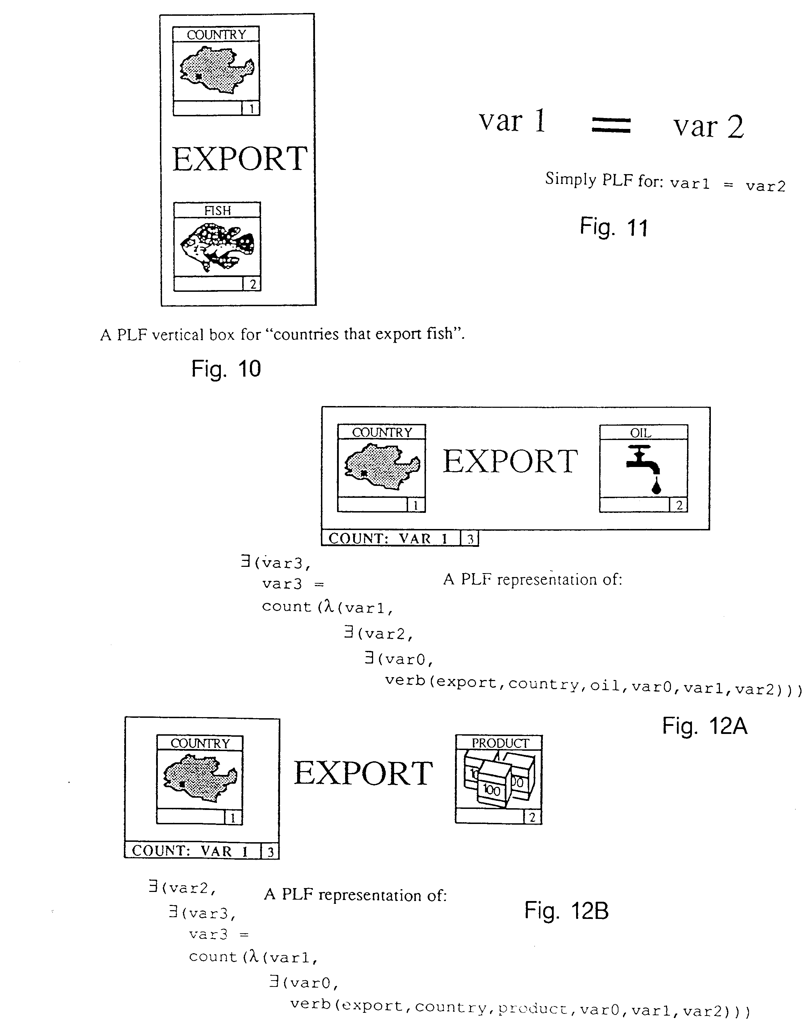

There is a second format for role PLFs, the "vertical box" (Fig. 10). In that box, the elements of the relation are ordered top- down, rather than left-to-right:

The vertical boxes are especially suited for the creation of "mixed boxes", where you can mix natural language and PLF expressions within, the same PLF box. Mixed boxes are presented in more detail below. The predicates of comparison are =, ≠, <, >, < and >, with obvious functions.

Terms:

```
<term>            ::=
    <arithmetic expr>  |
    <functional expr>  |
    <number>  |
    <string>  |
    <temporal term>  |
    <variable>
```

Comment:

Terms always occur in a context, i.e. as arguments to a relational operator. A relational operator, like " = ", is selected from the "Operations" menu, and the PLF expression in Fig. 10 is displayed.

Here 1 and 2 are new variable numbers. The numbers can be changed either through editing the numbers directly, or by choosing a variable number from the set of currently available variables (in the "Macros" menu). For terms that are strings, the convention is to write them within single quotes.

A convenient way of creating a predicate of comparison is to first select one of the EVIs that are part of the expression, then either type the operator on the keyboard, or choose it from the "Operations" menu, and then select the second EVI. An expression of the same type as in Fig. 11 will then be create

Functions:

```
<functional expr>  ::=
     <function> ( <set> )
```

```
<function>     ::=
     max | min | sum | count | average
```

Comment:

A term can be the result of applying one of the above functions to a PLF set. E.g. if the function s u m is applied to the set (30,90,10), the resulting numeric term is 130. The PLF way to represent this information graphically is to have a "function box", which symbolized the result of the application of a function. The representation of "count countries that export oil" is in Fig. 12A.

The small rectangle below the function box contains information on which function is applied to which variable. There is also a small box containing a variable number (3 in Fig. 12A), just like in an EVI. This variable can be used to specify more complex conditions, for instance "var 3 > 50", in order to find out whether there are more than 50 oil- exporting countries. Depending on what parts of an expression the function box includes, the scope of the function can be changed. Fig. 12B is basically the same type of expression as in Fig. 12A, but with a different scoping for the function. The corresponding natural language sentence would be "For each product, count the countries that export that product".

```
<arithmetic expr>  ::=
     <arithmetic term> <arithmetic op> <arithmetic term>
```

```
<arithmetic term>  ::=
     <arithmetic expr> |
     <functional expr> |
     <number> |
     <variable>
```

```
<arithmetic op>     ::=
     + | - | * | /
```

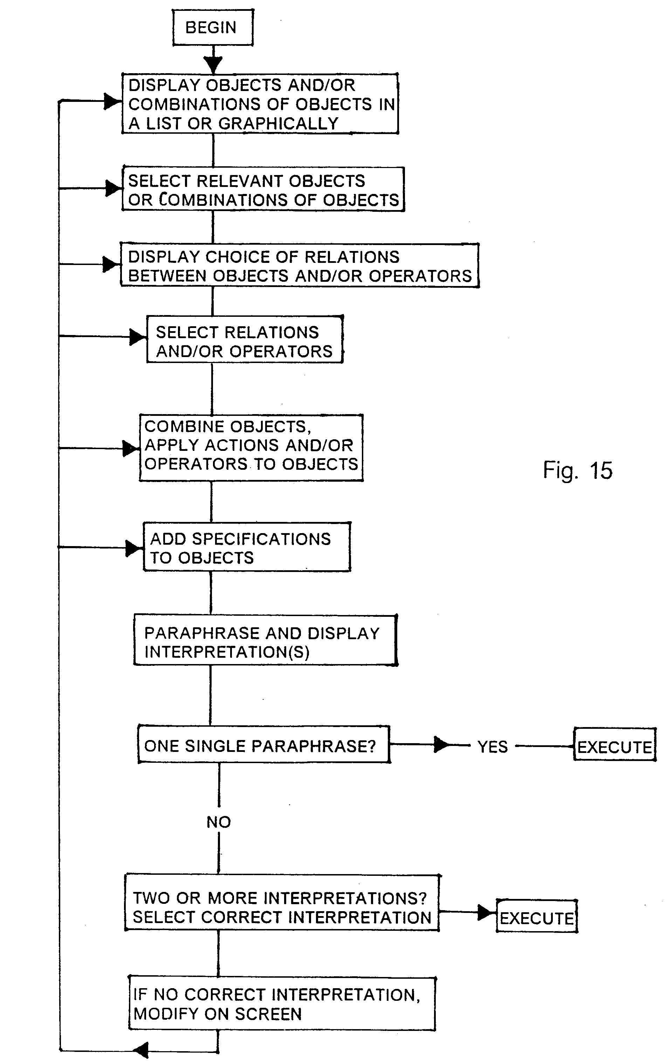

Arithmetic expressions are input in a manner similar to the specification of predicates of comparison, i.e. select an EVI, select operation and select another EVI. For instance, when specifying a term in a relational expression, the user first types "50" on the keyboard, then presses "+", and then selects "var 2" from the "Macros" menu, and the display shows the content of Fig. 13.

Variables can also be input from the keyboard via pressing <OPTION> N, where N is the variable number.

```
<temporal term>     ::=
     <variable> |
     time ( <Year> , <Month>, <Day>, <Hour>, <Min>, <Sec> )
```

9

Comment:

A PLF expression denoting a certain date or time is specified with an instance of the time/date icon (Fig. 14).

The flowchart in Fig. 15 shows the "algorithm" for composing a query in accordance with the invention.

One application for which direct manipulation according to the present invention should be very well suited is for languages having other forms of written representations of the language then the Latin alphabet, such as Chinese and Japanese, which both use variants of Kanji.

Kanji could in fact be equated with icon representation of concepts in a language, and thus it would be possible to implement the invention for creating a natural language interface by direct manipulation by using Kanji characters instead of icons in the system.

## Claims

1. A method of querying a data base in a computer system containing input means, processor means, graphical display means and storage means, said data base containing objects relating to a specified and limited domain of knowledge, by direct manipulation of graphical representations of said objects, said graphical representations being stored in memory, whereby each such graphical representation has a unique link to an entity in a conceptual schema, said schema containing a first set of records of data (entities) which are language independent representations of the objects in the data base, and further containing records of data representing relations between said objects **characterized** by the following steps:

   displaying on said graphical display means said graphical representations of said objects,

   selecting from the displayed representations those that represent those objects of the data base that are relevant to the query to be created,

   displaying on said graphical display means a choice of actions that can be performed on the graphical representations

   selecting from said displayed actions, ones that are appropriate for the query to be created,

   combining on the graphical display means the selected representations of objects with the selected appropriate actions in order to create a graphical representation of the desired query, whereby the combined graphical representations and actions represent a pictorial logical form of said query, and

   transforming said pictorial logical form into a formal query in a suitable query language.

2. The Method as claimed in claim 1, wherein said graphical representations are displayed in groups of interrelated objects.

3. The method as claimed in claim 1 or 2, wherein said pictorial logical form is a visual graphical representation of a conceptual logical form created in parallel to the pictorial logical form, said conceptual logical form containing all the information necessary to create a query in the formal query language.

4. The method as claimed in any of the preceding claims, wherein the conceptual logical form is processed to generate a paraphrase in natural language of the pictorial logical form as created on the graphical display means, before the step of of transforming into the query in the formal query language.

5. A method of querying a data base in a computer system containing input means, processor means, graphical display means and storage means, said data base containing objects relating to a specified and limited domain of knowledge, by direct manipulation of graphical epresentations of said objects, said graphical representations being stored in memory, whereby each such graphical representation has a unique link to an entity in a conceptual schema, said schema containing a first set of records of data (entities) which are language independent representations of the objects in the data base, and further containing records of data representing relations between said objects **characterized** by the following steps:

   a) display objects and/or combinations of objects in a list or graphically;
   b) select relevant objects or combinations of objects;
   c) displa a choice of relations between objects and/or a set of operators;
   d) select relations and/or operators;
   e) combine objects, and applying actions and/or operators to objects;
   f) add specifications to objects;
   g) paraphrase and display interpretation(s);

h) if there is only one single paraphrase, execute the query provided it is correctly interpreted by the system;

i) if there are two or more interpretations, select the correct one, and execute; and

j) if there is no correct interpretation, modify the query in the screen by repeating as appropriate the above steps.

6. Query composition apparatus, suitable for retrieval of information from data bases, comprising a data processor, a display unit with a manipulation area for manipulating graphical representations of data items stored in the data base, a stored formalized description of the data base, said description being kept in storage and containing data records representing the item in the data base, **characterized by**

a stored set of graphically displayable symbols representing items in the data base, said symbols being associated with the data records of the formalized description of the data base,

means for displaying said symbols;

means for selecting symbols appropriate for a desired query;

means for combining objects with each other, in order to build an aggregate of symbols representing the desired query;

means for executing the query.

7. Apparatus as claimed in claim 6, further comprising means for modifying and/or adding specifications to each symbol.

8. Apparatus as claimed in claim 6 or 7, further comprising means for paraphrasing the graphically constructed query and displaying the paraphrase for verifying the accuracy of the query before execution.

Fig. 1

Conceptual
Schema

Discourse
Memory

Interactive Composition of
Query Expression =
Logical Form

**Direct Manipulation
Interface**

Logical Form

**Paraphraser**

Natural Language
Paraphrase(s)

User Selection
of
Paraphrase

*(Additional Modification of Query)*

Selected
Logical Form

**DBMS**

Answer

Fig. 2

Conceptual
Schema

Discourse
Memory

Natural Language
Sentence

Parsing,
Logical Form Generation

**Natural Language
Interface**

Interactive Composition of
Query Expression =
Logical Form

**Direct Manipulation
Interface**

Logical Form(s)

Logical Form

**Paraphraser**

Natural Language
Paraphrase(s)

User Selection
of
Paraphrase

*(Additional Modification of Query)*

Selected
Logical Form

**DBMS**

Answer

Fig. 3

Fig. 4A

After selection of "Countries export products".

Fig. 4B

"Countries export fish.".

Fig. 4C

"What countries export fish?".

Fig. 5

OR

Fig. 6A

Fig. 6B

Fig. 6C

$$\text{var } 3 = 50 + \text{var } 2$$

Fig. 13

Fig. 14

Fig. 7A

Fig. 7B

Fig. 7C

Fig. 7D

EVI for `inst(var1,car).`

### Fig. 8A

EVI for `inst(var1,country)` ∧
`named(var1,'France').`

### Fig. 8B

EXPORT

### Fig. 9A

A PLF representation of
`verb(export,country,car,var0,var1,var2)`, or:
"countries that export cars".

### Fig. 9B

HAVE

A PLF representation of:
`possess(country,population,var1,var2)`

EXPORT TO

A PLF representation of:
`verb(export,country,car,var0,var1,var2)` ∧

`preprole(to,export,country,var0,var3)` ∧
`named(var3,USA).`

### Fig. 9C

**COUNTRY**

**1**

# EXPORT

**FISH**

**2**

$$\text{var } 1 \quad = \quad \text{var } 2$$

Simply PLF for: $\text{var1} = \text{var2}$

## Fig. 11

A PLF vertical box for "countries that export fish".

## Fig. 10

**COUNTRY**   EXPORT   **OIL**

**1**   **2**

**COUNT: VAR 1**   **3**

```
∃(var3,
   var3 =
   count(λ(var1,
        ∃(var2,
           ∃(var0,
              verb(export,country,oil,var0,var1,var2)))
```

A PLF representation of:

## Fig. 12A

**COUNTRY**   EXPORT   **PRODUCT**

**1**   **2**

**COUNT: VAR 1**   **3**

```
∃(var2,
   ∃(var3,
      var3 =
      count(λ(var1,
           ∃(var0,
              verb(export,country,product,var0,var1,var2)))
```

A PLF representation of:

## Fig. 12B

BEGIN

DISPLAY OBJECTS AND/OR
COMBINATIONS OF OBJECTS IN
A LIST OR GRAPHICALLY

SELECT RELEVANT OBJECTS
OR COMBINATIONS OF OBJECTS

DISPLAY CHOICE OF RELATIONS
BETWEEN OBJECTS AND/OR OPERATORS

SELECT RELATIONS
AND/OR OPERATORS

COMBINE OBJECTS,
APPLY ACTIONS AND/OR
OPERATORS TO OBJECTS

ADD SPECIFICATIONS
TO OBJECTS

PARAPHRASE AND DISPLAY
INTERPRETATION(S)

ONE SINGLE PARAPHRASE? ──► YES ──── EXECUTE

NO

TWO OR MORE INTERPRETATIONS?
SELECT CORRECT INTERPRETATION ──► EXECUTE

IF NO CORRECT INTERPRETATION,
MODIFY ON SCREEN

Fig. 15

20